# EUROPÄISCHE PATENTANMELDUNG

(11) **EP 3 416 119 A1**
(43) Veröffentlichungstag der Anmeldung: **19.12.2018**
(21) Anmeldenummer: 18176577.7
(22) Anmeldetag: 07.06.2018
(51) Int. Cl.: G06Q 20/32, G06F 21/36, G06F 21/42, G06F 21/44

(54) **VERFAHREN UND SYSTEM ZUR ECHTHEITSPRÜFUNG EINER VERTRAUENSWÜRDIGEN BENUTZEROBERFLÄCHE**

(30) Priorität: 12.06.2017 DE 102017112854; 20.06.2017 DE 102017113529
(71) Anmelder: Rubean AG, 81379 München (DE)
(72) Erfinder: Geupel, Hermann, 81925 München (DE)
(74) Vertreter: Heinze, Ekkehard

(57) **Zusammenfassung**

Verfahren zur Echtheitsprüfung einer eine Scan-Funktion einschließenden vertrauenswürdigen Benutzeroberfläche eines ersten Nutzerendgerätes, mit den Schritten
a) Installation einer die vertrauenswürdige Benutzeroberfläche bereitstellenden App, die ein aus einem privaten und öffentlichen Schlüssel bestehendes Schlüsselpaar eines ersten asymmetrischen Kryptosystems enthält, und Öffnen der App auf dem ersten Nutzerendgerät,
b) Öffnen einer dedizierten Website auf einem zweiten Nutzerendgerät und Eingabe einer selbst gewählten Echtheits-Kennzeichnung in eine geöffnete Websession auf der Website, die ebenfalls ein aus einem privaten und öffentlichen Schlüssel bestehendes Schlüsselpaar des ersten Kryptosystems enthält,
c) Generierung und Anzeige eines Grafikcodes auf dem Anzeigeschirm des zweiten Nutzerendgerätes durch die Websession der dedizierten Website,
d) Einscannen des auf dem zweiten Nutzerendgerät angezeigten Grafikcodes mittels des ersten Nutzerendgerätes in die App,
e) Identifizieren der Websession der dedizierten Website durch die App anhand des Grafikcodes und Einwählen in diese über das erste Nutzerendgerät,
f) gegenseitige Authentifizierung und Aufbau einer verschlüsselten Verbindung zwischen der App und der Website mittels deren Schlüsselpaare,
g) Übermittlung der Echtheits-Kennzeichnung von der Websession an die App auf dem ersten Nutzerendgerät,
h) dauerhafte Anzeige des Echtheits-Kennzeichens jeweils auf der geöffneten vertrauenswürdigen Benutzeroberfläche auf dem ersten Nutzerendgerät.

## Beschreibung

Die Erfindung betrifft ein Verfahren zur Echtheitsprüfung einer eine Scan-Funktion einschließenden vertrauenswürdigen Benutzeroberfläche eines Nutzerendgerätes, insbesondere Smartphones, sowie ein System zur Durchführung dieses Verfahrens. Ein solches Verfahren und System sind insbesondere im Kontext von Onlinezahlungen für Waren und Leistungen von Interesse.

In Onlineshops stehen heute oft mehrere Verfahren zur Auswahl, um sich im Rahmen der Autorisierung einer Onlinezahlung zu authentifizieren:
- mit Vorkasse, Sofortüberweisung oder PIN und TAN basierte Online-Banking-Verfahren, bei denen der Kunde seine Onlinebanking PIN parat haben und die TAN handhaben muss
- mit ApplePay und Selfie-Pay (http://www.welt.de/finanzen/verbraucher/article152595657/Mastercard-Kunden-koennen-bald-per-Selfie-bezahlen.html biometrische Verfahren, die zu fälschlichen Abweisungen führen können
- mit Paypal ein technisch nicht so sicheres Verfahren, mit der ausschließlichen Prüfung eines Passwortes.

In der unveröffentlichten europäischen Patentanmeldung Nr. 16204208.9 schlägt die Anmelderin ein für den Benutzer einfaches und doch hochgradig sicheres Verfahren und System der genannten Art vor, das mit hochwertigen mobilen Endgeräten zuverlässig funktioniert.

Hierbei wird einem geeigneten Smartphone die Funktion eines Kassenterminals für Debit- und Kreditkarten zugeordnet, die zu einer drahtlosen Nahbereichs-Datenübertragung (NFC) fähig sind. Im Hinblick auf die Erfüllung der für Bezahlvorgänge gängigen Sicherheitsanforderungen sind die herstellerseitig implementierten Sicherheitsmerkmale des jeweiligen Nutzerendgerätes von Bedeutung.

In der unveröffentlichten deutschen Patentanmeldung Nr. 102017106295.2 hat sich die Anmelderin die Aufgabe gestellt, ein weiteres benutzerfreundliches und zugleich sicheres Verfahren und System zur Autorisierung von Onlinezahlungen aufzuzeigen, das mit mittel- und niederpreisigen Endgeräten implementiert werden kann und somit für breitere Nutzerkreise zugänglich wird.

Die gestellte Aufgabe löst die genannte Anmeldung insbesondere dadurch, dass die Karten-PIN, die zu einer EMV konformen Aktivierung der Signaturfunktion auf der Debit- oder Kreditkarte (Karte) benötigt wird, nicht über eine Nutzerschnittstelle des Nutzerendgerätes (Smartphone) eingegeben wird, was Schutzmaßnahmen gegen ein PIN-Phishing erfordern würde, sondern automatisch von einem Server aus Ende-zu-Ende (vom Server zur Karte) gesichert über das Nutzerendgerät in die Karte geschickt wird.

Im Onlinebanking eingesetzt, ersetzt das dort beschriebene Verfahren die TAN (international: One Time Code) durch eine Signatur auf der Karte, die bisher nur über spezielle, kontaktbehaftete Kartenlesegeräte (Secoder) und nicht über ein handelsübliches Smartphone angestoßen werden konnte.

Auch angesichts dieses neueren Standes der Technik besteht, insbesondere angesichts weiter verfeinerter und aggressiver Phishing-Attacken, weiterhin das Problem der Gewährleistung einer möglichst alle Verfahrensschritte und Systemkomponenten einschließenden Gewährleistung höchstmöglicher Sicherheit vor einem Ausspähen kritischer Benutzerdaten.

Diese Aufgabe wird durch ein Verfahren mit den Merkmalen des Anspruchs 1, 2 oder 5 bzw. ein System mit den Merkmalen des Anspruchs 13 oder 14 gelöst. Zweckmäßige Fortbildungen des Erfindungsgedankens sind Gegenstand der jeweiligen abhängigen Ansprüche.

Die Erfindung schließt den Gedanken einer einmaligen Authentifizierung der für das Online-Banking genutzten vertrauenswürdigen Benutzeroberfläche über die Interaktion mit einer als vertrauenswürdig einzustufenden Website ein. Sie schließt weiter den Gedanken ein, hierbei eine vom Nutzer selbst gewählte Echtheits-Kennzeichnung bzw. einen Sicherheitscode zu nutzen, den der Benutzer nur einmal benötigt und sich daher nicht merken oder irgendwo speichern muss und der zugleich als "Echtheitssiegel" seiner Benutzeroberfläche dient. Die erwähnte Authentifizierung der Benutzeroberfläche im Zusammenwirken mit der Website erfolgt mittels eines asymmetrischen Kryptosystems, welches bevorzugt zugleich zur Verschlüsselung des Echtheits-Kennzeichens bei dessen Übermittlung zwischen Systemkomponenten dient. Obwohl die Echtheitsprüfung also einen zusätzlichen Ablauf einschließt, was für die Nutzer grundsätzlich unbequem ist, hält sich die zusätzliche Belastung in engen Grenzen und erscheint angesichts der signifikanten Erhöhung der Verfahrens- und Systemsicherheit als angemessen.

Mit der Erfindung wird bei Verfahren und Systemen der oben skizzierten Art eine signifikante Sicherheitslücke geschlossen und erreicht, dass der Benutzer sich auf die von ihm genutzte Benutzeroberfläche sorglos verlassen kann, was das Vertrauen der Nutzer in die genannten Verfahren und Systeme stärkt und somit deren Marktfähigkeit wesentlich verbessert.

In bevorzugten Ausführungen des Verfahrens und Systems sind das erste Nutzerendgerät ein Smartphone und die App eine Mobile App. Grundsätzlich ist die Erfindung aber auch bei an Datenleitungen angeschlossenen Nutzerendgeräten anwendbar.

In weiteren Ausführungen des Verfahrens ist der Grafikcode ein QR-Code und/oder die selbst gewählte Echtheits-Kennzeichnung eine mehrstellige Ziffern- und/oder Buchstabenfolge.

In einer weiteren Ausführung wird die Websession-Kennung, über die schließlich die Echtheits-Kennzeichnung an das erste Nutzerendgerät übertragen wird, nicht über einen Grafikcode angezeigt, sondern vollautomatisch und damit nutzerfreundlicher über einen Benachrichtigungsdienst übermittelt.

In einer weiteren Ausführung handelt es sich bei diesem Benachrichtigungsdienst um den Push Notification Service von Google® oder Apple®.

In einer weiteren Ausführung wird anstelle der Websession-Kennung ein Weblink an das erste Nutzerendgerät übertragen, über den das erste Nutzerendgerät schließlich die Echtheits-Kennzeichnung bezieht.

In einer weiteren vorteilhaften Ausführung umfasst die die vertrauenswürdige Benutzeroberfläche bereitstellende App mindestens eine erste Teil-App und eine zweite Teil-App, die in verschiedenen Bereichen des ersten Nutzerendgerätes installiert werden und miteinander verschlüsselt kommunizieren. Hierbei läuft insbesondere die verschlüsselte Kommunikation zwischen der ersten Teil-App und der zweiten Teil-App aufgrund eines symmetrischen Kryptosystems ab.

Unter Systemaspekten ist diese Ausführung insbesondere derart ausgestaltet, dass die erste Teil-App in einem Trusted Execution Environment, TEE, und die zweite Teil-App in einem embedded Secure Element, eSE, des ersten Nutzerendgerätes installiert wird. Speziell führt die zweite Teil-App die Kommunikation mit der vertrauenswürdigen Webseite, während die Anzeige der Echtheits-Kennzeichnung auf der vertrauenswürdigen Benutzeroberfläche durch die erste Teil-App realisiert wird.

Vorteile und Zweckmäßigkeiten der Erfindung ergeben sich im Übrigen aus der nachfolgenden Erläuterung eines Ausführungsbeispiels anhand der einzigen Figur sowie einer Abwandlung desselben.

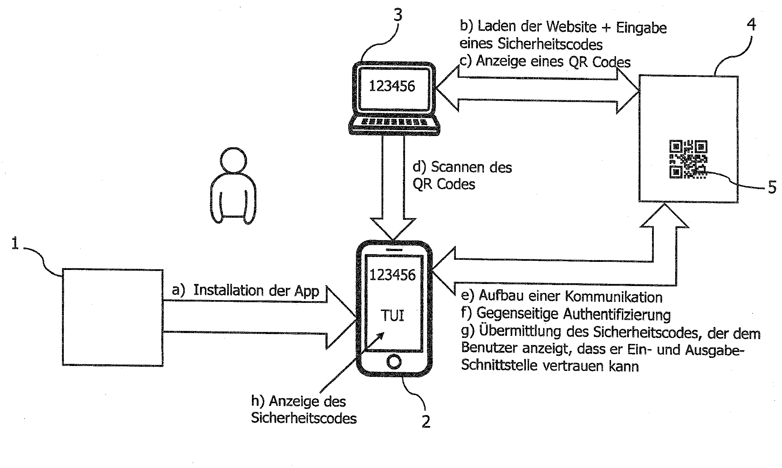

Nachdem die auf Echtheit zu prüfende Mobile App 1 auf dem Smartphone 2 des Benutzers installiert ist, öffnet der Benutzer in Schritt a) über einen Desktop-PC 3 eine vertrauenswürdige Webseite 4, die der Überprüfung der Echtheit der Mobile App dient. Auf der Webseite gibt er in Schritt b) einen Sicherheitscode ein, den er sich selbst ausgedacht hat und der in Fig. 1 als "123456" dargestellt ist.

Den in Schritt c) auf der Webseite 4 angezeigten zweidimenionalen Grafikcode 5, im Beispiel ein QR-Code, scannt der Benutzer in Schritt d) mit der Mobile App 1 ein. Der QR Code 5 zeigt der Mobile App die Websession an, in der PC 3 und Webseite 4 gerade verbunden sind, und ermöglicht es der Mobile App 1, sich in Schritt e) in die gleiche Websession einzuwählen.

In Schritt f) authentifizieren sich die Mobile App 1 und die Webseite 4 gegenseitig. Wenn das Smartphone 2 vorzugsweise über ein Trusted Execution Environment (TEE), das heißt eine getrennte Betriebssystemumgebung für fälschungssichere Ein- und Ausgaben über den Phonebildschirm, und ein embedded Secure Element (eSE), das heißt einen zusätzlichen Chip im Phone für sicherheitskritische Rechenprozesse, verfügt und die Mobile App 1 beide Sicherheitsumgebungen nutzt und entsprechend einen ersten App-Teil im TEE und einen zweiten App-Teil im eSE installiert, kommuniziert die Mobile App über ihren App-Teil 2 mit der vertrauenswürdigen Webseite und verwendet zur Authentifizierung einen privaten Schlüssel im zweiten App-Teil.

In Schritt g) teilt die Webseite 4 dem zweiten App-Teil nach einer erfolgreichen Authentifizierung vertraulich den vorher vom Benutzer eingegebenen Sicherheitscode mit, vorzugsweise verschlüsselt mit dem bei der gegenseitigen Authentifizierung verwendeten öffentlichen Schlüssel des zweiten App-Teils. Der zweite App-Teil reicht den Sicherheitscode vertraulich an den ersten App-Teil weiter, der ihn im Schritt h) fortan als Echtheitsmerkmal auf dem Trusted User Interface (TUI) anzeigt.

In einem leicht geänderten Ablauf könnte der Sicherheitscode auch über das TUI eingegeben und dann auf der vertrauenswürdigen Webseite angezeigt werden, um die Echtheit des TUI's zu prüfen. Entsprechend würde die Eingabe des Sicherheitscodes nicht im Schritt b) auf der Webseite sondern nach dem QR-Code basierten Kommunikationsaufbau zwischen Webseite und Mobile App zwischen Schritt f) und g) über die das TUI der Mobile App erfolgen. In einem weiteren Schritt müsste der Benutzer dann prüfen, ob auf der Webseite der gleiche Sicherheitscode angezeigt wird.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Verfahren zur Echtheitsprüfung einer eine Scan-Funktion einschließenden vertrauenswürdigen Benutzeroberfläche eines ersten Nutzerendgerätes, mit den Schritten
a) Installation einer die vertrauenswürdige Benutzeroberfläche bereitstellenden App, die ein aus einem privaten und öffentlichen Schlüssel bestehendes Schlüsselpaar eines ersten asymmetrischen Kryptosystems enthält, und Öffnen der App auf dem ersten Nutzerendgerät,
b) Öffnen einer dedizierten Website auf einem zweiten Nutzerendgerät und Eingabe einer selbst gewählten Echtheits-Kennzeichnung in eine geöffnete Websession auf der Website, die ebenfalls ein aus einem privaten und öffentlichen Schlüssel bestehendes Schlüsselpaar des ersten Kryptosystems enthält,
c) Generierung und Anzeige eines Grafikcodes auf dem Anzeigeschirm des zweiten Nutzerendgerätes durch die Websession der dedizierten Website,
d) Einscannen des auf dem zweiten Nutzerendgerät angezeigten Grafikcodes mittels des ersten Nutzerendgerätes in die App,
e) Identifizieren der Websession der dedizierten Website durch die App anhand des Grafikcodes und Einwählen in diese über das erste Nutzerendgerät,
f) gegenseitige Authentifizierung und Aufbau einer verschlüsselten Verbindung zwischen der App und der Website mittels deren Schlüsselpaare,
g) Übermittlung der Echtheits-Kennzeichnung von der Websession an die App auf dem ersten Nutzerendgerät,
h) dauerhafte Anzeige des Echtheits-Kennzeichens jeweils auf der geöffneten vertrauenswürdigen Benutzeroberfläche auf dem ersten Nutzerendgerät.

2. Verfahren zur Echtheitsprüfung einer eine Scan-Funktion einschließenden vertrauenswürdigen Benutzeroberfläche eines ersten Nutzerendgerätes, mit den Schritten
a) Installation einer die vertrauenswürdige Benutzeroberfläche bereitstellenden App, die ein aus einem privaten und öffentlichen Schlüssel bestehendes Schlüsselpaar eines ersten asymmetrischen Kryptosystems enthält, und Öffnen der App auf dem ersten Nutzerendgerät,
b') Öffnen einer dedizierten Website auf einem zweiten Nutzerendgerät, die ebenfalls ein aus einem privaten und öffentlichen Schlüssel bestehendes Schlüsselpaar des ersten Kryptosystems enthält
c) Generierung und Anzeige eines Grafikcodes auf dem Anzeigeschirm des zweiten Nutzerendgerätes durch die Websession der dedizierten Website,
d) Einscannen des auf dem zweiten Nutzerendgerät angezeigten Grafikcodes mittels des ersten Nutzerendgerätes in die App,
e) Identifizieren der Websession der dedizierten Website durch die App anhand des Grafikcodes und Einwählen in diese über das erste Nutzerendgerät,
f) gegenseitige Authentifizierung der App und der Website und Aufbau einer verschlüsselten Verbindung zwischen mittels deren privater und öffentlicher Schlüssel,
g1') Eingabe einer selbst gewählten Echtheits-Kennzeichnung über die geöffnete Benutzeroberfläche auf dem ersten Nutzerendgerät,
g2') Übermittlung der Echtheits-Kennzeichnung vom ersten Nutzerendgerät, von der App an die Website in der Websession,
g3') Verifizierung durch den Benutzer, dass auf dem zweiten Nutzerendgerät in der Websession die selbst gewählte Echtheits-Kennzeichnung angezeigt wird,
g4') Bestätigung der erfolgreichen Verifizierung durch eine Bestätigungseingabe auf dem ersten Nutzerendgerät,
h) dauerhafte Anzeige des Echtheits-Kennzeichens jeweils auf der geöffneten vertrauenswürdigen Benutzeroberfläche auf dem ersten Nutzerendgerät.

3. Verfahren nach Anspruch 1 oder 2, wobei das erste Nutzerendgerät ein Smartphone und die App eine Mobile App ist.

4. Verfahren nach einem der vorangehenden Ansprüche, wobei der Grafikcode ein QR-Code ist.

5. Verfahren zur Echtheitsprüfung einer vertrauenswürdigen Benutzeroberfläche eines ersten Nutzerendgerätes, mit den Schritten
a) Installation einer die vertrauenswürdige Benutzeroberfläche bereitstellenden App, die ein aus einem privaten und öffentlichen Schlüssel bestehendes Schlüsselpaar eines ersten asymmetrischen Kryptosystems enthält, und Öffnen der App auf dem ersten Nutzerendgerät,
b) Öffnen einer dedizierten Website auf einem zweiten Nutzerendgerät und Eingabe einer selbst gewählten Echtheits-Kennzeichnung in eine geöffnete Websession auf der Website, die ebenfalls ein aus einem privaten und öffentlichen Schlüssel bestehendes Schlüsselpaar des ersten Kryptosystems enthält,
c') Versand der Kennung der geöffneten Websession vom Webserver der geöffneten Website an einen Benachrichtigungsdienst, an dem sich das erste Nutzerendgerät bereits einmal registriert hat,
d') Weiterleitung der Kennung der geöffneten Websession vom Benachrichtigungsdienst an das erste Nutzerendgerät
e') Identifizieren der Websession der dedizierten Website durch die App anhand der übermittelten Kennung und Einwählen in die Websession über das erste Nutzerendgerät,
f) gegenseitige Authentifizierung und Aufbau einer verschlüsselten Verbindung zwischen der App und der Website mittels deren Schlüsselpaare,
g) Übermittlung der Echtheits-Kennzeichnung von der Websession an die App auf dem ersten Nutzerendgerät,
h) dauerhafte Anzeige des Echtheits-Kennzeichens jeweils auf der geöffneten vertrauenswürdigen Benutzeroberfläche auf dem ersten Nutzerendgerät.

6. Verfahren nach Anspruch 5, wobei der Benachrichtigungsdienst ein sogenannter Push Notification Service von Google® oder Apple® ist.

7. Verfahren nach Anspruch 5 oder 6, wobei anstelle der Kennung der geöffneten Webseite ein Weblink an das erste Nutzerendgerät gesendet wird, über den das erste Nutzerendgerät schließlich die Echtheits-Kennzeichnung bezieht.

8. Verfahren nach einem der vorangehenden Ansprüche, wobei die selbst gewählte Echtheits-Kennzeichnung eine mehrstellige Ziffern- und/oder Buchstabenfolge ist.

9. Verfahren nach einem der vorangehenden Ansprüche, wobei die Übermittlung der selbst gewählten Echtheits-Kennzeichnung von der Webseite an die App verschlüsselt mit dem öffentlichen Schlüssel der App bzw. von der App an die Webseite verschlüsselt mit dem öffentlichen Schlüssel der Webseite erfolgt.

10. Verfahren nach einem der vorangehenden Ansprüche, wobei die die vertrauenswürdige Benutzeroberfläche bereitstellende App mindestens eine erste Teil-App und eine zweite Teil-App umfasst, die in verschiedenen Bereichen des ersten Nutzerendgerätes installiert werden und miteinander verschlüsselt kommunizieren, wobei insbesondere die verschlüsselte Kommunikation zwischen der ersten Teil-App und der zweiten Teil-App auf asymmetrische Schlüsselpaare eines zweiten asymmetrischen Kryptosystems in jeder Teil-App aufbaut.

11. Verfahren nach Anspruch 9 oder 10, wobei die erste Teil-App in einem Trusted Execution Environment, TEE, und die zweite Teil-App in einem embedded Secure Element, eSE, des ersten Nutzerendgerätes installiert wird, und die Kommunikation in der Websession durch die zweite Teil-App und die Anzeige der Echtheits-Kennzeichnung auf der vertrauenswürdigen Benutzeroberfläche durch die erste Teil-App realisiert wird.

12. System zur Durchführung des Verfahrens nach einem der vorangehenden Ansprüche, aufweisend:
ein erstes Nutzerendgerät,
eine auf dem ersten Nutzerendgerät installierte App, die eine eine Scan-Funktion einschließende vertrauenswürdige Benutzeroberfläche auf dem ersten Nutzerendgerät implementiert und ein aus einem privaten und öffentlichen Schlüssel bestehendes Schlüsselpaar eines ersten asymmetrischen Kryptosystems enthält,
ein zweites Nutzerendgerät,
eine dedizierte Website zur Realisierung der Echtheitsprüfung, die ebenfalls ein asymmetrisches Schlüsselpaar enthält und zur Kommunikation mit der App und zur Generierung eines Grafikcodes und dessen Anzeige auf dem zweiten Nutzerendgerät ausgebildet ist.

13. System zur Durchführung des Verfahrens nach einem der Ansprüche 1 bis 11, aufweisend:
ein erstes Nutzerendgerät,
eine auf dem ersten Nutzerendgerät installierte App, die eine vertrauenswürdige Benutzeroberfläche auf dem ersten Nutzerendgerät implementiert und ein aus einem privaten und öffentlichen Schlüssel bestehendes Schlüsselpaar eines ersten asymmetrischen Kryptosystems enthält,
ein zweites Nutzerendgerät,
einen Benachrichtigungsdienst, an dem sich das erste Nutzerendgerät registriert hat,
eine dedizierte Website zur Realisierung der Echtheitsprüfung, die ebenfalls ein asymmetrisches Schlüsselpaar enthält und zur Kommunikation mit der App und zum Versand einer Websession-Kennung über den Benachrichtigungsdienst an das erste Nutzerendgerät ausgebildet ist.

14. System nach Anspruch 12 oder 13, wobei das erste Nutzerendgerät ein Smartphone und die App eine Mobile App ist.

15. System nach einem der Ansprüche 12 bis 14, wobei die die vertrauenswürdige Benutzeroberfläche bereitstellende App mindestens eine erste Teil-App und eine zweite Teil-App umfasst, die in verschiedenen Bereichen des ersten Nutzerendgerätes installiert werden und zu einer verschlüsselten Kommunikation miteinander ausgebildet sind, wobei die erste und zweite Teil-App insbesondere die Komponenten eines zweiten asymmetrischen Kryptosystems enthalten und/oder wobei insbesondere die erste Teil-App in einem Trusted Execution Environment, TEE, und die zweite Teil-App in einem embedded Secure Element, eSE, des ersten Nutzerendgerätes installiert ist und die zweite Teil-App zur Kommunikation in der Websession und die erste Teil-App zur Anzeige der Echtheits-Kennzeichnung auf der vertrauenswürdigen Benutzeroberfläche dient.
